# EUROPEAN PATENT APPLICATION

(11) **EP 0 936 022 A2**
(43) Date of publication of application: **18.08.1999**
(21) Application number: 99300784.8
(22) Date of filing: 03.02.1999
(51) Int. Cl.: B23K 26/00, H05B 3/26

(54) **Method for treatment of an element, especially a heating element, and an element produced by this method**

(30) Priority: 12.02.1998 NO 980612
(71) Applicant: Nobö Electro AS, 7500 Stjördal (NO); Myhre, Jon, 7500 Stjördal (NO)
(72) Inventor: Myhre, Jon, 7500 Stjördal (NO)
(74) Representative: Dealtry, Brian

(57) **Abstract**

Method for processing a glass element comprising a glass carrier in the form of a plate, with a layer of tin oxide or similar material which gives the electrical insulating glass conductivity with a determined resistance value. The basis is unhardened glass to which is added particles of a conductive material together with an additive, which together is heat-treated to create a glassy layer containing the converted materials, after which the materials will be hardened. At least one part is connected to an electrode for imposing voltage. The conductive material layer of the heat element is processed with a laser beam with a wavelength which is absorbed in the surface of the glass.

## Description

Method for treatment of an element, especially a heating element, and an element produced by this method.

The present invention concerns a method for production of an element according to the preamble of claim 1, particularly for use in different heating applications, such as panel heaters, heating of window panes in houses and vehicles, and an element for other uses. The invention also includes a glass element, particularly an electrical heating element, which is produced according to this method.

### Background

It is known to use electrical heating elements consisting of glass plates with a coating of tin oxide, forming a resistance element, whereby a power supply is provided with electrodes at opposite ends of the plate. Such a coating may be achieved by spray-pyrolysing of tin oxide doped with Fluor; SnO₂, and has a specific resistance, normally about 15-20 ohm/square. These values are for a plate of 10 x 10 cm area, so that double width provides half resistance, and double length provides double resistance.

The resistance will thus depend upon both the length and the width of the glass plate, so that area and proportions are used to achieve the desired electrical power values. This makes it difficult to adjust both power and proportions to get a heater with various power values at a certain size. Correspondingly it is difficult to make an adjustable heater which is appropriately dimensioned.

Therefore it is desirable to split the resistance coating so as to achieve different effects for a certain plate. This can be done by splitting the tin oxide into areas which may have separated power supplies, and thus may be connected in different ways like prior art sectioned heated heating elements. Thus, with one plate it will be possible to create an adjustable heating element.

It is known to use acid to corrode grooves in the resistance layer of the glass. This, however, requires masking, a large amount of water and creates a undesirable pollution when flushing away the acid, for example hydrogen fluoride.

It is also known to use grinding belts to grind away the grooves in the glass. But this is time-consuming and pollutive because the grinding creates large amounts of glass powder swirling up during the grinding.

The upper layer of the glass may also be removed by sandblasting, but this is an undesirable process, both with regard to accuracy and pollution.

US patent 4044222 describes removal of a thin film from a semi-conductor, by cutting a pattern in the film with high-energy laser beams. There it is used materials which do not create problems during heat treatment, so that use of a laser may be considered uncomplicated.

From PCT-patent publication WO96/41370, it is known to remove a coating from a carrier, which may be glass, without affecting the carrier. It is a requirement for this method that excessive energy is not supplied to the carrier so as not to cause an increase in temperature, which would affect the carrier.

It is not known to use laser beams, i.e. coherent, monochromatic light with high intensity, to remove glass.

### Object

The main object of the invention is to provide a method for manufacturing heating elements, which offers the possibility for flexible adjustment of the resistance value, so that an element with a given size may have different effects. A further object is to provide a method for splitting up a heating element of the said kind, so that the effect can be gradually adjusted with sufficient possibility for variation.

### Invention

The method according to the invention is stated in patent claim 1. It has proven possible to treat hardened glass in such a way that a surface layer can be removed in a groove without destroying or cracking the substrate glass. The mechanism behind this removal of material is not completely understood.

Current lasers supply infrared light. The wavelength from for example a CO₂ -laser will be 10,6 micrometer. Such light will not pass through the glass plate, but rather be absorbed in the surface region and cause local heating. It is assumed that the glass melts in the surface-region struck by the laser-beam. As the melted glass then immediately sets, there is reason to believe that local expansive tensions occur quickly, and causes a fine cracking and granulating of the glass where the laser has hit. Therefore a groove of loosened or cracked glass powder or glass granules is created.

Hardened glass has partly strong compressive tensions in the surface-region but in the centre of the glass there are corresponding expansive tensions. As long as the groove which is created, is relatively shallow, it is reasonable to assume that the compressive forces counteract the movement of cracks spreading inwards into the glass material.

The present invention breaks the prevailing assumption concerning use of laser radiation by known material removal, namely that one should avoid heating of glass material. This is probably because of a belief that such energy influence on glass and especially on hardened glass, would cause tensions that more or less regularly would cause formation of cracks, or risk for such cracks to arise during mechanical stress of the glass.

Patent claims 2 and 3 concern especially favourable conditions for carrying out the invention. The inventions includes a heating element according to patent claim 4.

### Example

The invention will be described with reference to the accompanying drawings, wherein
Fig. 1 shows a perspective view of an embodiment of a heater with a heating element manufactured according to the present invention,
Fig. 2 shows an enlarged section through the heating element in Fig. 1, in an untreated area,
Fig. 3 shows a chart illustrating the tensions in the glass,
Fig. 4 shows a further enlarged section through a groove in the heating element in Fig. 1, while
Fig. 5 shows an enlarged photo of a groove in a heating element produced according to the invention.

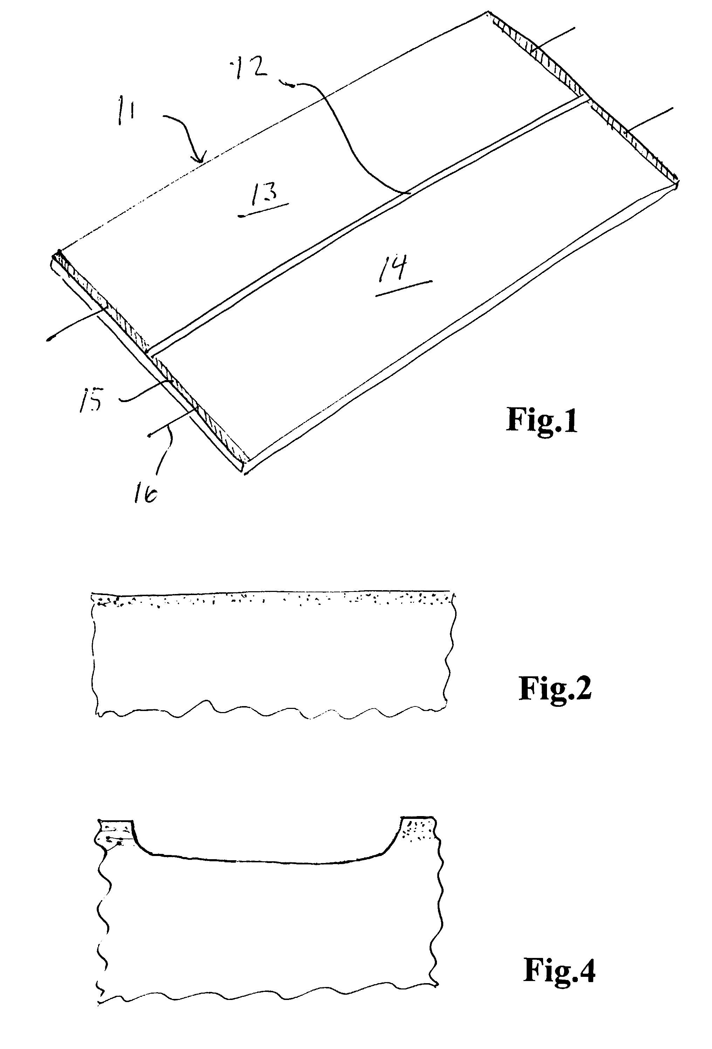

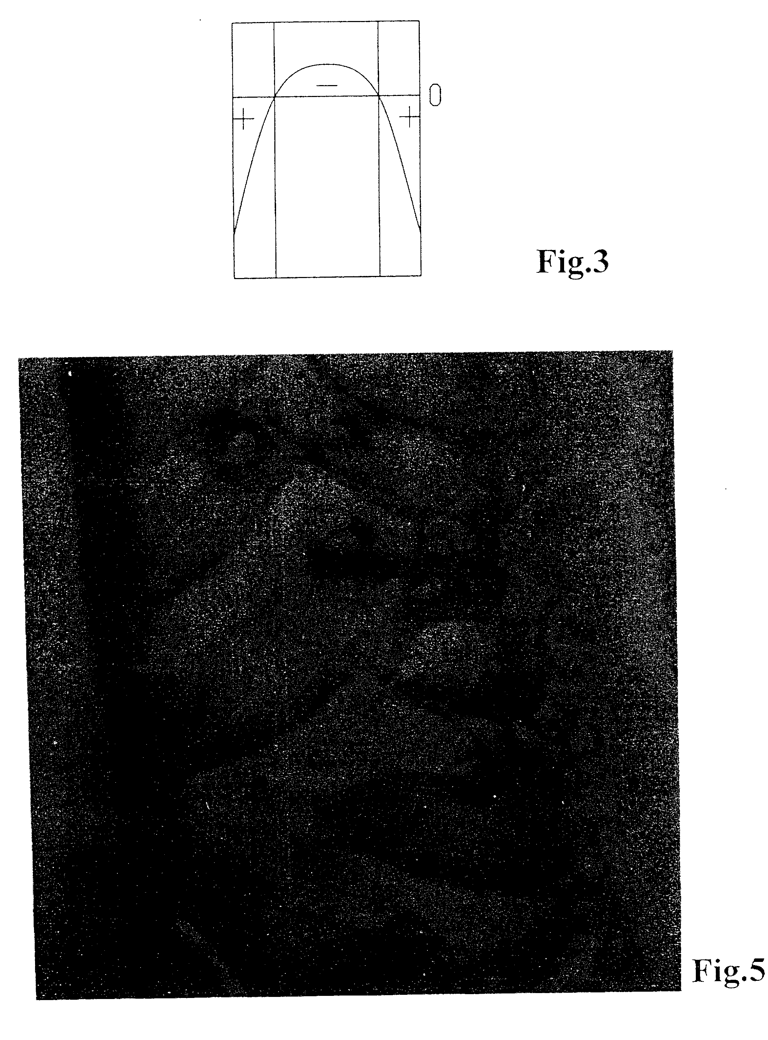

Fig. 1 shows a heating element 11 shaped as a plate, which has been produced according to the invention in order to achieve resistance values which offer the possibility for power control. The heating element is made of glass with a tin oxide containing layer, which will be further described with reference to Fig. 2 - 5.

The heating element 11 is rectangular and provided with a longitudinal groove 12, splitting the tin oxide containing layer into two equal areas 13 and 14. The process of providing the groove 12, will be evident from the following description. At the end of each area, there is fastened an electrode 15 with a metallic coating, for example metallic silver, with a connection 16. The two areas 13 and 14 constitute separate heating elements, in this case with almost equal resistance values. This offers a possibility for connection of the two parts separated, both in series and parallel, in a conventional way. With an alternative embodiment, the areas can have a width length ratio 1:2, so that it is possible to create different power steps.

Fig. 2 shows a section of the heating element 11 in an untreated area. Tensions in a thermally hardened glass will typically have a distribution as shown in Fig. 3. At a distance from the surface, of about 1/5 of the thickness, there will be zero residual tension. The tensions in the surface (marked +) will be compressive, while the tensions in the middle (marked -) will be expansive. Such a distribution of tensions is achieved by heating the non-hardened glass close to liquid, and then cooling it very rapidly. Owing to the large temperature-gradients, a shell will be formed at the surface, and successively the rest of the glass will harden and contract more than the "shell", and tensions according to the figure, will be created.

The glass heating element was treated with a laser beam and the wavelength was controlled so that the radiation was absorbed by the top layer, meaning in the layer with conducting particles, and a small distance below.

In the example a long waved infrared radiation is used, with a wavelength about 10 µm. With a cutting speed of up to 10 m/min, and a beam-diameter of 1-2 mm, at the surface, tests were carried out with laser power of 100-3000 W.

Fig. 4 shows an enlarged section through the heating element in Fig. 1, after the treatment which was described above, through the groove 12 which splits the resistance layer into separate layers. The groove in the surface of the glass will depend on the intensity and wavelength of the laser, the focus of the beam and how fast the beam is moved over the surface. For infrared waves with wavelength around 10 µm (CO₂-laser gives light with wavelength 10,6 µm), glass will normally not be transparent and the energy will be absorbed in the surface. If the beam is focussed at the surface, a high intensity is achieved in a small area, and the groove will be narrow and relatively deep. A wide and shallow groove can be achieved when the focus of the beam is a few mm below or above the surface. The combination of intensity, focus and how fast the beam is moved over the surface, will decide how deep the groove will be.

It is assumed that the glass melts when the laser hits the surface. Immediately after the laser has passed, the glass hardens again, it will shrink slightly, and tensions will be created, which is believed to cause local cracking and pulverizing of the glass. Since the tensions in the surface of hardened glass are compressive, one can assume that the cracks will not develop deeper into the glass. If on the other hand, a melting into the expansive zone of the glass occurs, the glass-substrate will immediately be granulated.

Fig. 5 shows an enlarged photo of a groove which is created with the method according to the invention. The photo shows the cracking of the glass surface along a line which, after the dissolving of the granulated glass, creates a groove which separates two areas of the conducting surface layer of the glass, with an intermediate electronically insulating space.

The heating element according to the invention can be used for a multitude of purposes, where there is a demand for a sheet like heating element, especially for heating different kinds of rooms. Further it can be used as heating elements for purposes where transparence is desired, for example in windows or observation glasses.

It is also possible to use glass with an electrical resistance coating on one side for purposes other than heating, for example for electronical protection. In this case it may be sufficient to impose voltage with one single electrode.

## Claims

1. Method for treatment of an element comprising a glass carrier which is formed as a plate, with a layer of tin oxide or similar material which gives the electrical insulating glass conductivity with a resistance-value which makes it possible to utilize the glass carrier as heating element, where unhardened glass has been added particles of a conductive material, preferably together with an additive, which is heat-treated together to create a glassy layer containing the converted particles, after which the glasses will be hardened, and whereby at least one part of the glass is connected to an electrode for imposing voltage,
**characterized** in that the conductive material layer of the element, is processed with a laser beam which is so focused in relation to the surface of the element, that it absorbs energy in the processed area of the face of the element, such that a cracking and/or pulverizing occurs in the material, in order to make a groove, the element and the laser beam being moved mutually during treatment.

2. Method according to patent claim 1,
**characterized** in that long waved infrared radiation is used, with a wavelength about 10 µm.

3. Method according to patent claim 2,
**characterized** in that at a speed of motion up to about 10 m/min and a beam diameter of 1-2 mm at the surface of the element, and a laser power of about 100 - 3000 W is used.

4. Element produced by the method according to any of the patent claims 1 - 3,
particularly a heating element.
